Europäisches Patentamt

European Patent Office

Office européen des brevets

(11) Publication number: **0 335 166**
**A2**

# EUROPEAN PATENT APPLICATION

(21) Application number: **89104553.6**

(22) Date of filing: **15.03.89**

(51) Int. Cl.⁴: **B60R 25/04**

(30) Priority: **29.03.88 IT 4682488**
**24.05.88 IT 4685488**

(43) Date of publication of application:
**04.10.89 Bulletin 89/40**

(84) Designated Contracting States:
**BE DE ES FR GB GR NL**

(71) Applicant: **DEC S.R.L.**
**Viale Regina Elena, 17/b**
**I-42100 Reggio Emilia(IT)**

(72) Inventor: **Bigliardi, Rino**
**Via Sessi, 20**
**I-42100 Reggio Emilia(IT)**

(74) Representative: **Luksch, Giorgio, Dr.-Ing. et al**
**Ing. A. Giambrocono & C. S.r.l. Via Rosolino**
**Pilo, 19/b**
**I-20129 Milano(IT)**

(54) **Antitheft device for diesel or petrol engine vehicles.**

(57) The invention comprises an anti-tamper protection casing (1, 101) which can be easily fitted to protect an essential electrical member of a diesel engine, such as the diesel fuel solenoid feed valve (8), or by interposing an internal adaptor (10, 10A) an essential electrical member of a petrol engine, such as the relative coil (17).

Said protection casing (1, 101) is arranged to allow the passage of an electrical conductor (15) to be electrically connected to said member (8, 17), and is provided with fixing means (4, 14, 14', 121) to allow an electronic antitheft control unit to be directly or indirectly connected to it.

Fig. 8

EP 0 335 166 A2

## ANTITHEFT DEVICE FOR DIESEL OR PETROL ENGINE VEHICLES

This invention relates to an antitheft device for diesel or petrol engine vehicles.

In the field of electrical or electronic antitheft systems for motor vehicles, the known art is centered on the provision of devices arranged to inhibit the operation of an essential member of the engine (such as the solenoid valve in the diesel fuel line in diesel engines or the coil in petrol engines) by generally activating electrical contacts in parallel with the contact to be protected, typically to result in "earthing" to prevent its operation. This derives from the belief that it is difficult or practically impossible to prevent an electrical contact being bypassed by the thief, who always has a good knowledge of electrical systems. In other words, as it is considered impossible to prevent electrical access to the contact to be protected, the design of antitheft equipment has been based on electrical inhibition of the contact itself rather than mechanical inhibition. This is the basis for example of Italian patent No. 1,154.066 and Italian utility model No. 183,408.

This design tendency has led and still leads to considerable drawbacks. Firstly, the antitheft circuits generally of electronic type connected in parallel with the contact to be protected have demonstrated interference during the operation of the engine, especially when applied to engines with electronic ignition. In practice the signal from the electronic ignition control unit undergoes disturbance and interference by the antitheft circuits connected in parallel.

Secondly, these known antitheft systems can be connected only to one precise pole (generally the + pole) of the engine member to be protected, with the result that their field of application is specialised and limited.

In contrast, attempts at mechanically inhibiting access to the essential contact have been hindered by the total specialisation of the means used for this purpose, to the extent that it can be applied only to very particular types of engines. This is the basis of Italian utility model No. 175,724 in which the device is applicable to only one type of rotary pump for diesel engines.

An object of the present invention, which surprisingly deviates from the design concepts previously used, is to provide a means which prevents access to an essential electrical contact of the engine. A further object is to provide a means which can be removed only with considerable difficulty and work, to the extent of prolonging the time required for carrying out a theft. A further object is to provide a means of very wide application, ie applicable with very little modification both to the very many types of available petrol engines and to diesel engines, independently of the polarity to which it is applied.

A further object of the present invention is to provide a protection means which can act as a support for an electronic antitheft control unit or be connected to this latter, if located distant from said protection means, by a protected conductor.

These objects are attained in that the arrangement comprises a protection casing divided into at least two parts which are joined together by known anti-tamper means and designed to at least partly enclose an essential element of an engine such as the solenoid valve in the diesel fuel line or the coil of a petrol engine, either directly or where necessary by way of an inner insulating core which acts as an application adaptor by allowing the protection casing to be applied to different essential electrical elements of an engine such as a connector stud or low voltage contact of a coil in a petrol engine; said casing being provided with means for its connection to an electrical or electronic antitheft control unit of known type.

The invention will be more apparent from the description of some applicational examples given hereinafter with reference to the accompanying drawings.

In said drawings:

Figure 1 is a perspective view showing an arrangement in which a known antitheft control unit is mechanically fixed to a protection casing;

Figure 2 is a detailed side view showing the application of a protection half-casing (during the assembly of the antitheft device) to a usual solenoid valve installed in the diesel fuel line of a diesel engine;

Figure 3 is a perspective view of the same half-casing applied to a contact (or connector stud) of an ignition coil in a petrol engine;

Figure 4 is a side sectional view of the object of Figure 3;

Figure 5 shows various views of the components which fix the casing to the contact or connector stud of Figures 3 and 4;

Figure 6 is a side view showing the finished appearance of an antitheft device according to the invention, applied to a said ignition coil;

Figure 7 is a perspective cut-away view showing the method of fixing an adaptor core to a low voltage contact in an ignition coil having terminals of a different type from the preceding;

Figure 8 is an exploded perspective view of the two types of coil, with the relative adaptor cores for applying the two half-casings (also shown, in the centre) which provide antitheft protection.

Figure 9 is a transparent diagrammatic view of a vehicle in which an antitheft arrangement is installed with its casing and control unit positioned at different points of the vehicle and connected together by an armoured cable in which the electrical conductor or conductors which connect the two together are thus protected;

Figures 10 and 11 are diagrammatic side and cross-sectional views of the armoured protection cable;

Figures 12 and .13 are side and bottom views of the casing associated with the armoured cable;

Figure 14 is a side view of the casing and its adaptor core, shown separated;

Figure 15 is a perspective view of the casing of Figures 12 to 14 with the adaptor core inserted.

In said figures the reference numeral 1 indicates overall a metal protection casing formed from two half-casings 1', 1" which can be joined together by two known anti-tamper screws 3.

The half casing 1' is provided with a base flange 4 to be clamped by a screw 5 to an antitheft control unit 2, for the purpose of establishing mechanical solidarity between the two elements.

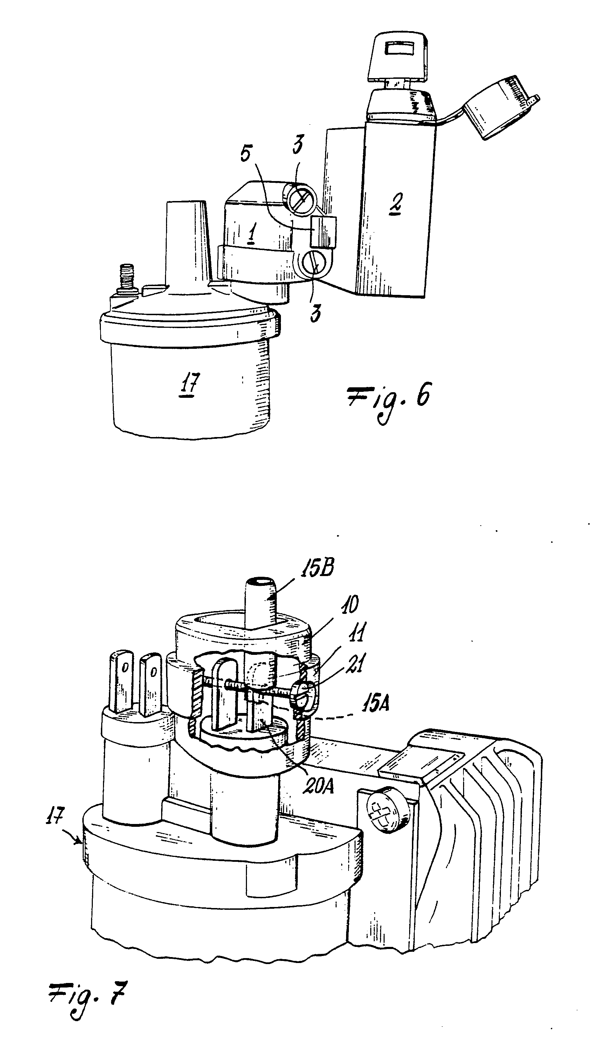

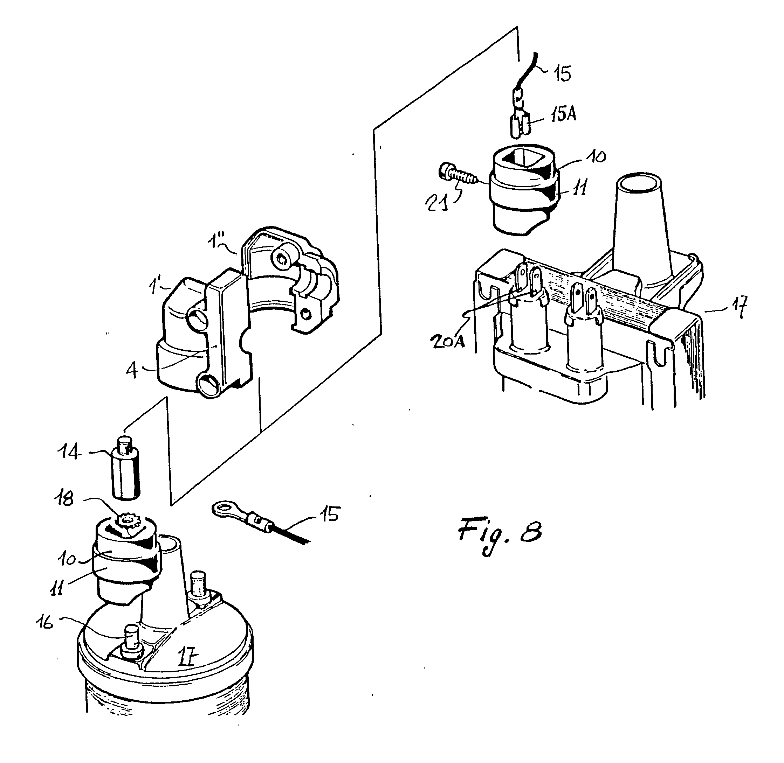

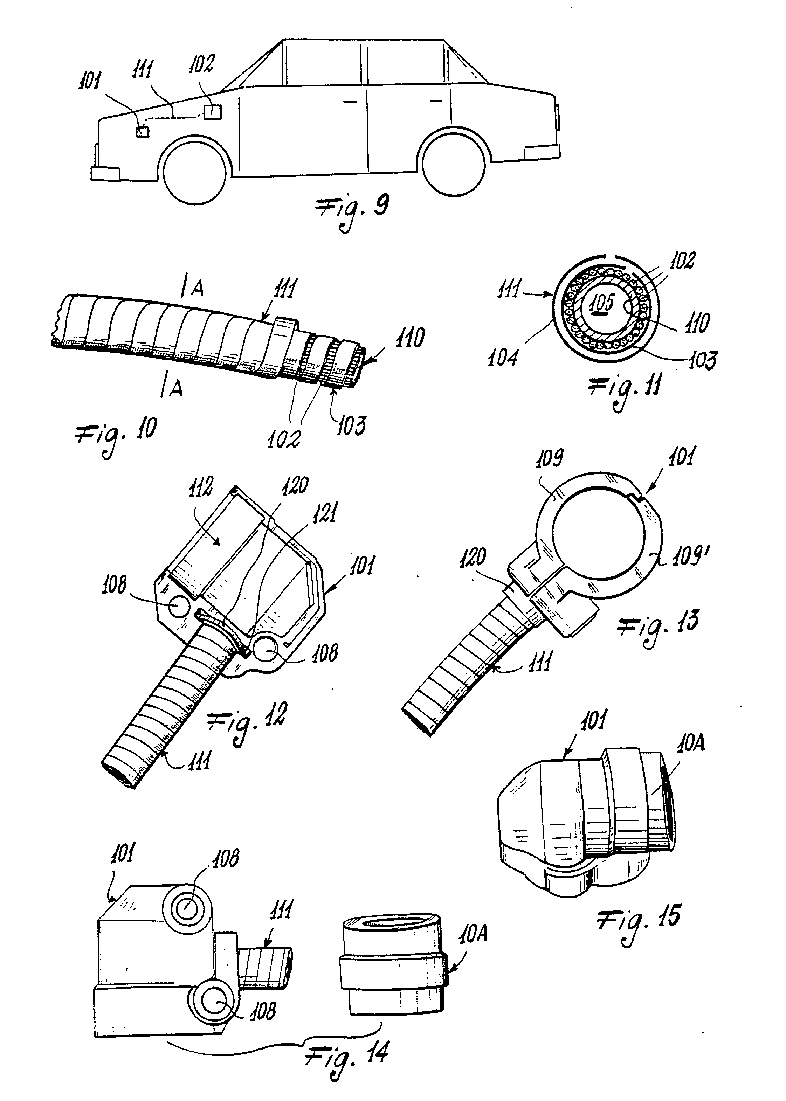

The profile of each half-casing 1' and 1" comprises an inwardly projecting rim 6 which together with an inner counter-rim 7 encloses the tooth. formed by the projection of the tightening nut 9 in the case of the solenoid valve 8 provided in the diesel fuel line (Figure 2) of a diesel engine, or alternatively to enclose a projecting band 11 on the outside of an adaptor core 10 of insulating material for use if the antitheft device is applied to petrol engine ignition coils (such as in Figures 3 and 4).

The interior of the casing 1 defines a cavity 12 in which the threaded conducting end 13A of the solenoid valve 8 is positioned together with the nut 13 which is screwed onto this end to clamp the electrical conductor 15, which extends from the control unit 2 and through which the solenoid valve is controlled. For this purpose the conductor 15 passes through a channel 14 formed by the two half-casings 1', 1". In said channel there is provided an annular groove 14' into which there is inserted a corresponding end flange (not shown) of a tubular extension projecting from the control unit 2. In this manner, aided by the screws 5, a secure and protected connection is formed between the control unit 2 and the casing 1.

In the case of petrol engines (see specifically Figures 3 to 8), the core 10 is fixed to the pole (for example the connector stud 16) to be protected. In the case of a conventional coil 17 (Figures 3 and 4), this fixing is done by an elongated dead-ended nut of conducting material 14 which is screwed onto the pole or connector stud 16 of the coil 17 by way of a washer 18. The nut 14 presses against a holed bottom diaphragm 19 of the core 10 to clamp this latter onto the body of the coil 17.

At its top the elongated nut 14 comprises a threaded pin 20 to act as the connection terminal for the conductor 15, together with the clamping nut 13B.

If the pole of the coil is of a type other than the aforesaid connector stud type, such as the double lug type 20A shown in Figures 7 and 8, the core 10 is fixed to the pole by a transverse screw 21 which engages the wall of the core 10, the two metal lugs forming the pole 20A and the electrical conductor 15A (see Figure 8) mounted on said lugs 20A and partly covered for example by the insulating sleeve 15B.

The method of fixing the protection casing 1 to the core 10 is identical, and is based on interference between the two inner rims 6, 7 of the casing 1 and the outer circular band 11 of the core.

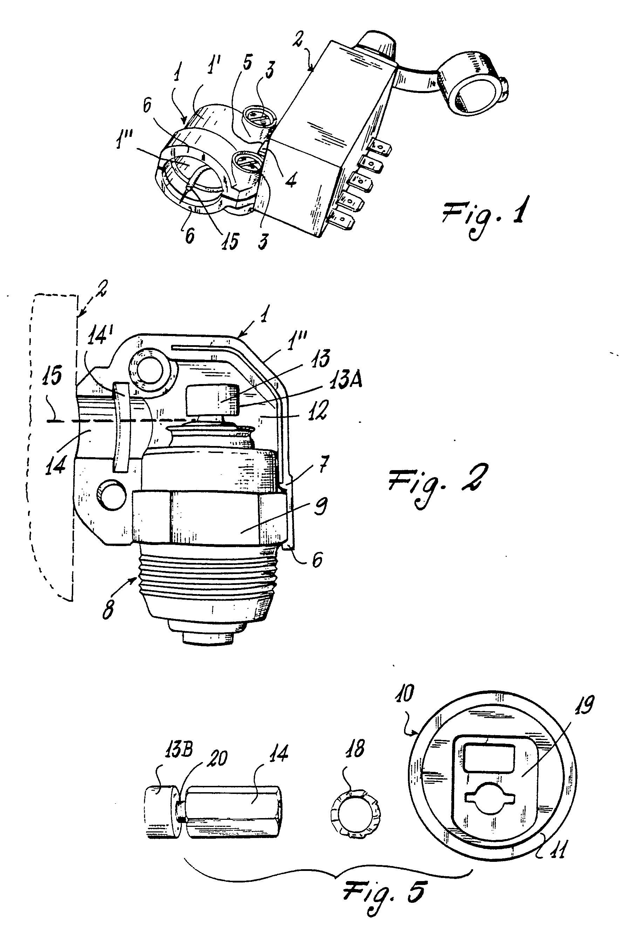

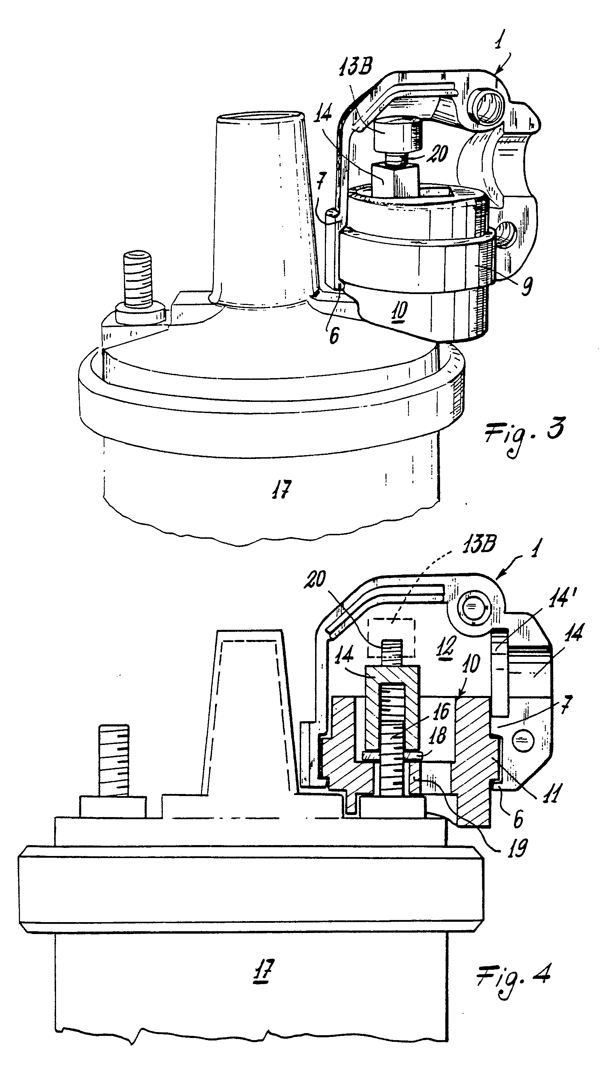

For assembly, the casing 1 is applied directly when protecting an essential member of the engine such as the solenoid valve 8, the casing 1 being mechanically and securely connected to a known electronic antitheft control unit 2, as can be seen in Figure 1. For application to petrol engines, the casing 1 is fitted to the adaptor core 10 after fixing this latter to the pole to be protected in the manner shown particularly in Figures 4 and 7.

. The object of inhibiting access by mechanical. protection to the electrical connection of an essential member of the engine, the operation of which is controlled by the antitheft control unit, is thus attained so obtaining reliable and versatile protection of wide application to many types of diesel and petrol engines.

In a possible modification shown by way of example in Figures 9 to 15, the connection between the protection casing 101 and the electronic antitheft control unit 102 is made by a conduit or armoured cable, so providing continuity in the anti-tamper protection of the electrical part downstream of the control unit 102 together with the facility for locating the electronic control unit separate from the protection casing 101.

Specifically, with reference to Figures 9 to 15, to connect the control unit to the casing there is provided a conduit or flexible armoured cable 111 consisting in particular of an inner tubular part of insulating material 110 to house the electrical conductor or conductors between the control unit and the engine member to which the casing 101 is connected. The reference numeral 102 indicates a cylindrical sheath of steel wires surrounding the part 110, 103 indicates a helical binding of steel tape, and 104 indicates a helical binding of insulating tape. Headers are secured to the metal parts of the armoured tube as its ends to allow connection to the casing 101 and to the control unit 102. One header is visible in Figure 12. It comprises a flange 120 which is inserted into an annular groove 121 formed when the half-casings are joined together.

The reference numeral 112 indicates a hollow space within the protection casing 101 to house the electrical contact connections made between the electric cable or cables emerging from the tube 111 and a controlled member of the motor vehicle; 10A indicates the adaptor core which can be provided within the casing 101; 108 indicates the seats for containing two known anit-tamper bolts or screws; and 109 and 109' indicate the two half-casings which form the casing 101.

## Claims

1. An antitheft arrangement for motor vehicles in general, comprising an electrical or electronic control unit (2, 102) operating on a vital electrical member of the vehicle such as the solenoid valve (8) of a diesel engine or the coil (17) of a petrol engine, characterised in that at least the external electrical part (13A, 16, 20A) of the engine vital electrical member (8, 17) on which the control unit (2, 102) operates is enclosed in an armoured casing (1, 101) arranged to be fixed to said electrical member (8, 17).

2. An arrangement as claimed in claim 1, characterised in that the control unit (2) is directly connected to the armoured casing (1).

3. An arrangement as claimed in claim 1, characterised in that the control unit (102) and casing (101) are connected together by an armoured cable (111).

4. An arrangement as claimed in one or more of the preceding claims, characterised in that the armoured casing (1, 101) is formed of two half-casings (1', 1'') joined together by known anti-tamper means (3) to define: a groove for its mechanical fixing to the electrical member (8, 17), a cavity (12, 112) housing the external electrical part (13A, 16, 20A) of the electrical member (8, 17) and an access channel (14) for providing communication with the control unit (2, 102).

5. An arrangement as claimed in one or more of the preceding claims, characterised by comprising an adaptor core (10., 10A) of insulating material to be confined within the casing (1, 101).

6. An arrangement as claimed in claim 5, characterised in that the adaptor core (10, 10A) comprises externally a projection (11) to be received within the groove of the casing (1), and internally a diaphragm (19) with at least one through hole (Figure 4).

7. An arrangement as claimed in one or more of the preceding claims, characterised in that a flange (4) designed to house means (5) for its fixing to the control unit (2) is provided on at least one of the half-casings (1', 1'').

8. An arrangement as claimed in one or more of the preceding claims, characterised in that mechanical fixing means (14') are provided inside the casing (1) in correspondence with the access channel (14).

9. An arrangement as claimed in one or more of the preceding claims, characterised in that to secure the casing (1) and the adaptor core (10) to the electrical member (17) when in the form of a coil with threaded connector studs (16) there is provided a dead-ended nut (14) screwable onto one of said connector studs and carrying a threaded extension (20) for the engagement of a nut (13) for connecting the electrical conductor (13) which leads to the control unit.

10. An arrangement as claimed in one or more of claims 1 to 8, characterised in that to secure the casing (1) and the adaptor core (10) to the electrical member when in the form of a coil with lug-type pole contacts (20A), a transverse bore is provided through the core (10) for mounting a screw (21) which passes through the lugs (20A) of one pole.

Fig. 1

Fig. 2

Fig. 5

*Fig. 3*

*Fig. 4*

Fig. 6

Fig. 7

Fig. 8

Fig. 9

Fig. 10

Fig. 11

Fig. 12

Fig. 13

Fig. 14

Fig. 15